Europäisches Patentamt

European Patent Office

Office européen des brevets

(11) Veröffentlichungsnummer: **0 250 751 B1**

# (12) EUROPÄISCHE PATENTSCHRIFT

(45) Veröffentlichungstag der Patentschrift: **19.11.92**

(51) Int. Cl.⁵: **A01N 25/10**, A01N 25/22, A01N 53/00

(21) Anmeldenummer: **87105817.8**

(22) Anmeldetag: **21.04.87**

(54) **Applikation von biologisch aktiven Verbindungen als Bodenbiozide.**

(30) Priorität: **01.07.86 DE 3621991**

(43) Veröffentlichungstag der Anmeldung:
**07.01.88 Patentblatt 88/01**

(45) Bekanntmachung des Hinweises auf die
Patenterteilung:
**19.11.92 Patentblatt 92/47**

(84) Benannte Vertragsstaaten:
**CH DE FR GB LI**

(56) Entgegenhaltungen:
**DE-A- 2 011 143**
**DE-A- 2 655 398**
**FR-A- 741 322**
**FR-A- 1 439 896**

**PESTICIDE SCIENCE, Band 9, Nr. 5, Oktober 1978, Seiten 433-444; R.M. WILKINS: "The use of biodegradable polymers as formulating agents for controlled release pesticides"**

(73) Patentinhaber: **GESELLSCHAFT FÜR STRAHLEN- UND UMWELTFORSCHUNG M.B.H.**
**Ingolstädter Landstrasse 1 Post Oberschleissheim**
**W-8042 Neuherberg(DE)**

(72) Erfinder: **Bahadir, Müfit, Dr.**
**Birkenweg 13**
**W-8051 Zolling(DE)**
Erfinder: **Pfister, Gerd, Dr.**
**Sudetenlandstrasse 8**
**W-8050 Freising(DE)**
Erfinder: **Korte, Friedhelm, Prof. Dr.**
**Sonnenstrasse 2**
**W-8053 Attenkirchen(DE)**
Erfinder: **Lorenz, Wilhelm, Dr.**
**Ferdinand-Wallbrecht-Strasse 26**
**W-3000 Hannover 1(DE)**

## Beschreibung

Die Erfindung betrifft die Applikation von biologisch aktiven Verbindungen als Bodenbiozide, wobei die Verbindungen auf eine Trägersubstanz aufgezogen und mit dem Boden in Kontakt gebracht werden.

Als Bodeninsektizide werden bisher persistente und/oder toxische Substanzen wie z.B. Chlorkohlenwasserstoffe und organische Phosphorsäurederivate verwendet. Diese erhöhte Persistenz führt jedoch dazu, daß die Bodeninsektizide weniger umweltverträglich sind, Rückstände in Boden und Pflanzen verbleiben und darüber hinaus toxische Gefahren für Mensch und Tier bergen. Zwar gibt es umweltverträglichere insektizide Wirkstoffe hoher Wirksamkeit wie die Pyrethroide, bei Applikation auf/im Boden verlieren sie aber rasch ihre Wirkung, so daß sie nicht direkt für den Einsatz vorgesehen werden.

Das Einsatzgebiet solcher Bodeninsektizide wie die Pyrethroide beschränkte sich bislang auf den vorbeugenden Holzschutz ("Holz als Roh- und Werkstoff" 43 (1985) 339-343). In diesem Anwendungsgebiet kommt es darauf an, daß die Pyrethroide hoch stabil bleiben, eine lange Verweilzeit im Holz aufweisen und möglichst keine Flüchtigkeit in die Gasphase besitzen, so daß sie nicht zu einer Kontamination von Innenräumen beitragen. So ergeben Messungen für die Pyrethroide Fenvalerat und Cypermethrin Halbwertszeiten der Wirkstoffe in Holz von 4,2 bzw. 2,1 Jahren; ein Zeitraum, der für den Einsatz als Pflanzenschutzmittel überhaupt nicht in Betracht kommt.

Zusammenfassend kann demnach festgestellt werden, daß Pyrethroide wirksame Kontaktinsektizide mit einem Wirkungsspektrum vergleichbar mit Chlorpyriphos und Carbofuran sind. Ihre Einsatzmöglichkeiten als Bodeninsektizide werden jedoch begrenzt durch ihre Immobilität und ihren raschen Abbau im Boden. So betragen die Halbwertszeiten von vier Pyrethroiden Permethrin, Cypermethrin, Fenpropanat und Fenvalerat bei Bodenapplikation im allgemeinen weniger als 1 Monat, in einigen Fällen weniger als 2 Monate.

Die der Erfindung zugrundeliegende Aufgabe besteht darin, die zeitlich regulierbare Applikation von biologisch aktiven Verbindungen mit hohen Wirkungsspektren, aber geringer Stabilität im/auf dem Boden, zu ermöglichen.

Die Lösung ist im kennzeichnenden Merkmal des Anspruches 1 beschrieben.

Die übrigen Ansprüche geben vorteilhafte Ausführungsformen für biologisch wirksame Verbindungen und Trägersubstanzen an.

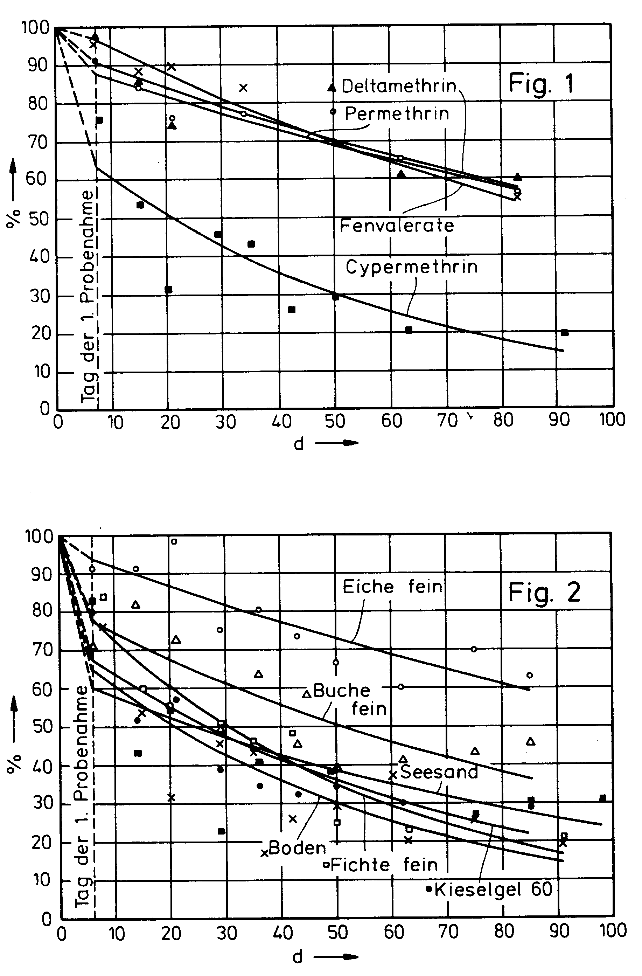

Die Erfindung wird im folgenden anhand von Ausführungsbeispielen mittels der Tabellen 1 und 2 sowie der Figuren 1 und 2 näher dargestellt.

Material und Methoden, die zur Untersuchung der aus den Verbindungen ausgesuchten Pyrethroide Verwendung finden:

Pyrethroide: Cypermethrin technical (Shell Research LIM, U.K.), Fenvalerat (Sumito Chemical Co., LTD, Osaka, Japan) Deltamethrin und Permethrin (Fa. Ehrenstorfer, d-8900 Augsburg).

Lösungsmittel: p.a. bzw. für Chromatographie (Merck).

Adsorbentien: Seesand (Merck, Nr. 7711), Kieselgel 60 (Merck, Nr. 7754), Fractosil 200 (Merck, Nr. 9380), Fractosil 1000 (Merck, Nr. 9384), Fractosil 25000 (Merck, Nr. 9395), Holzmehl von Eiche, Fichte und Buche, gewonnen durch Fräsen und fraktioniertes Sieben: fein 1,0 mm, grob = 1.0-1.4 mm. Pentachlorphenol (Riedel-De Haen) und 4-Hydroxybenzoesäure (Merck, Nr. 821814).

Testboden: homogenisierte, standardisierte Braunerde der Zusammensetzung Ton (< 2 $\mu$m) 33,6 %, Schluff (2-63 $\mu$m) 27,4 %, Sand (0,06-2 mm) 32,4 %, Grobanteile (> 2 mm) 6,6 %, Ges.-org. Substanz 3,15 %, Ges.-N 0.21 %, pH-Wert 6,4 und Wassergehalt 15 %.

HPLC: Pumpe Fa. Waters, Modell 590; Dioden Array UV-Detektor ($\lambda$ = 220 mm), Fa. Hewlett Packard HP 1040 A; Säule 25 cm x 4,6 mm i.D. RP-18 5 um; Elutionsmittel Acetonitril/Wasser (90/10 v/v), 1,0 ml/min.

Abbautests: 250 $\mu$g Wirkstoff in wenig Aceton wird auf 0,5 g Adsorbens gegeben und Aceton entfernt. 50 g Boden werden mit 0,5 g Formulierung bzw. 250 $\mu$g Wirkstoff in wenig Aceton versetzt und nach Verdunsten des Acetons in einem braunen Schraubdeckelglas (100 ml) homogenisiert. Die geöffneten Gläser werden in einem klimatisierten Raum bei 22° C ± 2 °C und 44 % ± 4 % Luftfeuchtigkeit gelagert. Alle zwei Wochen wird der Wasserverlust der Testböden durch Verdunstung mit destilliertem Wasser wieder ausgeglichen. Zur Bestimmung des unveränderten Anteils der Wirkstoffe im Boden wird jeweils der Gesamtinhalt eines Probenglases in einen Soxhlett-Extraktor überführt und mit Ethylacetat extrahiert. 1-20 $\mu$l der auf 100 ml aufgefüllten Extrakte werden mit HPLC und externer Standardisierung analysiert. Die Ermittlung der Halbwertszeiten erfolgt aus computerunterstützten Regressionsrechnungen.

Ergebnisse:

Werden die Pyrethroide im Boden appliziert, erweist sich Cypermethrin mit einer Halbwertszeit von 21

2

Tagen als sehr instabil, während Fenvalerat, Deltamethrin und Permethrin mit Halbwertszeiten $t_{1/2}$ = 88 - 126 Tagen weit beständiger sind. Die Figur 1 und Tabelle 1 geben diese Ergebnisse wieder.

Die Applikation des Cypermethrins nach vorheriger Adsorption auf anorganischen Trägern Fractosil, Seesand und Kieselgel verändert seine Stabilität im Testboden nur unwesentlich ($t_{1/2}$ = 15 - 26 d). Eine Formulierung mit feinem Fichtemehl verbessert die Halbwertzeit ebenfalls nur geringfügig ($t_{1/2}$ = 30 d). Bessere Ergebnisse werden erfindungsgemäß dagegen bei Verwendung von feinem Buche- bzw. Eiche-Mehl ($t_{1/2}$ = 52 bzw. 110 d) als Adsorbentien erhalten. Diese Verhältnisse werden in Figur 2 bzw. Tabelle 1 wiedergegeben.

Tabelle 1:

Stabilität von Pyrethroiden im Boden (5 ppm); Halbwertszeiten in Abhängigkeit von der Art der Wirkstofformulierung.

| Wirkstoff | Formulierung | Halbwertzeit $t_{1/2}$ (Tage) |
|---|---|---|
| Cypermethrin | nicht formuliert | 21 |
| | Fractosil 25000 Å | 15 |
| | Fractosil 1000 Å | 18 |
| | Fractosil 200 Å | 25 |
| | Kieselgel 60 Å | 26 |
| | Seesand | 24 |
| | Fichte fein | 30 |
| | Buche fein | 52 |
| | Eiche fein | 110 |
| | Fichte grob | 66 |
| | Fichte fein (mit PCP)[1] | 52 |
| | Fichte fein (mit 4-Hydroxy-benzoesäure)[1] | 52 |
| Deltamethrin | nicht formuliert | 110 |
| | Fichte fein | 170 |
| | Eiche fein | 475 |
| Permethrin | nicht formuliert | 126 |
| | Fichte fein | 132 |
| | Eiche fein | 190 |
| Fenvalerat | nicht formuliert | 88 |
| | Fichte fein | 113 |
| | Eiche fein | 233 |

[1] Zugabe von 100 µg PCP bzw. 250 µg 4-Hydroxybenzoesäure zu 0,5 g formuliertem Wirkstoff (= 5 ppm Rückstandsgehalt)

In dieser Untersuchung konnte erfolgreich gezeigt werden, daß es möglich ist, die Stabilität von Pyrethroiden im Boden durch Formulierung mit unterschiedlichen Sorten von Holzmehl sukzessiv zu erhöhen. Solche Pyrethroide können Formulierungen anderer Bodeninsektizide mit unerwünschter Persistenz und/oder hoher Warmblütertoxizität ersetzen.

Ähnliche Ergebnisse werden bei Verwendung von feinem Fichte-und Eiche-Mehl zur Formulierung der anderen drei Pyrethroide erhalten. Während die Wirkstoffadsorption auf Fichte-Mehl eine Verlängerung der Halbwertzeiten im Boden zwischen 5 % (Permethrin) und 55 % (Deltamethrin) bewirkt, erreicht man mit Hilfe von Eiche-Mehl 51 % (Permethrin) bis 332 % (Deltamethrin). Fenvalerat nimmt jeweils eine Mittelstellung ein (Tab. 1).

Der rasche Abbau von Permethrin im Boden wird auf Bodenmikroorganismen zurückgeführt. Dies wird durch Untersuchungen unterstützt, in denen Permethrin und Fenvalerat in sterilisierten Böden eine signifikant höhere Stabilität aufweisen als in Naturböden. Auch die vorliegenden Untersuchungen bestätigen diesen Sachverhalt. Wird bei der Formulierung von Cypermethrin mit feinem Fichte-Mehl gleichzeitig 100 μg Pentachlorphenol bzw. 250 μg 4-Hydroxybenzoesäure als bakterizide Wirkstoffe auf Holzmehl adsorbiert, so verlängert sich die Halbwertzeit des Cypermethrins im Boden von 30 auf 52 Tage (um 73 %). Mit Hilfe von grobem Fichte-Mehl wird sogar $t_{1/2}$ = 66 d erreicht, was offensichtlich auf das günstigere Oberflächen-Volumen-Verhältnis zurückzuführen ist, welches einen mikrobiellen Angriff auf die in tieferen Holzschichten adsorbierten Wirkstoffmoleküle erschwert. Die Harthölzer Buche - und noch mehr - Eiche verhindern wahrscheinlich den mikrobiellen Abbau der Wirkstoffe, da sie selbst unter diesen Bedingungen besonders stabil sind.

In der Tabelle 2 sind die Ergebnisse eines Laborversuchs zur Kohlfliegenbekämpfung mit synthetischen Pyrethroiden dargelegt. Hierbei wurde folgende Methode angewandt:

Für den Versuch wurden 8 Wochen alte, im Gewächshaus herangezogene und getopfte Blumenkohlpflanzen verwendet. Während der gesamten Versuchsdauer wurden die Pflanzen in einer Klimakammer mit künstlicher Beleuchtung und bei einer konstanten Temperatur von 20° C gehalten. Das Anstreuen der Versuchspräparate um den Wurzelhals der Pflanzen erfolgte am 21.3.86. Pro Versuchsvariante wurden 25 Pflanzen (5 Wiederholungen mit je 5 Pflanzen) behandelt. Nach vier Tagen am 25.3.86 wurde jede Pflanze mit 20 Eiern der Kleinen Kohlfliege belegt. Eine Kontrolle des Eischlupfes erfolgte am 1./2.4.86, Am 22./23.5.86 wurden Pflanzen und Topferde einzeln ausgewaschen und die Zahl der Larven und Puppen der Kleinen Kohlfliege ermittelt sowie die Entwicklungsrate berechnet.

## Tabelle 2:

| Versuchsglied | Entwicklungsrate (%) | |
|---|---|---|
| 1. Kontrolle unbehandelt | 34,88 | a |
| 2. Kontrolle Träger ohne Wirkstoff 1 g/Pfl. | 40,29 | a |
| 3. Chlorfenvinphos 50.000 μg/Pfl. | 0,43 | b |
| 4. Deltamethrin 50 μg/Pfl. | 21,31 | a b |
| 5. Deltamethrin 500 μg/Pfl. | 2,04 | b |
| 6. Deltamethrin 5.000 μg/Pfl. | 7,15 | b |
| 7. Cypermethrin 50 μg/Pfl. | 41,90 | a |
| 8. Cypermethrin 500 μg/Pfl. | 1,90 | b |
| 9. Cypermethrin 5.000 μg/Pfl. | 0,00 | b |

Mittelwerte mit den gleichen Buchstaben unterscheiden sich nicht signifikant voneinander.

Die Entwicklungsrate bei Laborversuchen mit der Kleinen Kohlfliege liegt gewöhnlich bei 40 %.

**Patentansprüche**

1. Applikation von biologisch aktiven Verbindungen als Bodenbiozide, wobei die Verbindungen auf eine Trägersubstanz aufgezogen und mit dem Boden in Kontakt gebracht werden, dadurch gekennzeichnet, daß

    a) die Trägersubstanz Späne, Mehl oder Grieß aus Holz ist und

    b) die Verbindungen Pyrethroide sind.

2. Applikation nach Anspruch 1, dadurch gekennzeichnet, daß durch Holzart und Körnigkeit der Trägersubstanz die Halbwertzeit der Pyrethroide im Boden einstellbar ist.

**Claims**

1. Application of biologically active compounds as soil biocides, the compounds being cultivated on a carrier substance and being brought into contact with the soil, characterised in that

    a) the carrier substance is wood shavings, sawdust or wood granules; and

    b) the compounds are pyrethroids.

2. Application according to claim 1, characterised in that the half-life period of the pyrethroids in the ground is adjustable by the type of wood and granular nature of the carrier substance.

**Revendications**

1. Utilisation de composés biologiquement actifs en tant que biocides pour le sol, les composés étant fixés sur une substance de support et mis en contact avec le sol, caractérisée en ce que

    a) la substance de support consiste en copeaux, farine ou semoule de bois, et

    b) les composés sont des pyréthrinoïdes.

2. Utilisation selon la revendication 1, caractérisée en ce que la demi-vie des pyréthrinoïdes dans le sol est ajustée au moyen du type de bois et de la granulométrie de la substance de support.

Fig. 1

Deltamethrin
Permethrin
Fenvalerate
Cypermethrin

Tag der 1. Probenahme

Fig. 2

Eiche fein
Buche fein
Seesand
Boden
Fichte fein
Kieselgel 60

Tag der 1. Probenahme